# EUROPEAN PATENT APPLICATION

(11) **EP 1 325 713 A1**
(43) Date of publication of application: **09.07.2003**
(21) Application number: 01130701.4
(22) Date of filing: 21.12.2001
(51) Int. Cl.: A61C 5/00, A61C 1/00

(54) **Method and apparatus for preparing ceramic material**

(71) Applicant: MTF MediTech Franken GmbH, 90542 Eckental (DE)
(72) Inventor: Iwatschenko, Peter, D-91077 Neunkirchen (DE)
(74) Representative: von Hellfeld, Axel, Dr. Dipl.-Phys.

(57) **Abstract**

A method and an apparatus for preparing, from a raw material, a moisturized formable material for filling a dental cavity is described. The raw material comprises powdered binding agents which, after moistening with a liquid, react with the binding agents to form a chemically bonded ceramic material. Before filling the formable material into a dental cavity, it is exposed to mechanical forces for rearranging the internal structure of the formable material.

An apparatus for performing such a method comprises a container (10) for receiving the formable material and means (14) for applying said forces to the formable material (12).

## Description

The present invention is concerned with a method for preparing from a raw material a formable material, an apparatus for forming a formable material and the use of a dental drill for forming dental material. In particular, the present invention is concerned with a formable material which can be used for any application in which a ceramic material is required comprising extremely high mechanical strength and other properties as outlined below. In particular, the formable material described can be used for filling a dental cavity. In the following, the invention is described with regard to such a dental cavity, however, the material can be used for other applications as well.

Recently a chemically bound ceramic product was developed as a material for filling, in particular, dental cavities, see in particular WO 01/76534 A1 and WO 01/76535 A1 and Journal Of Materials Science 35 (2000) 5879-5883, J.LI and L.HERMANSSON, High-Strength Aluminate Cement Produced By Cold Isostatic Pressing".

The present invention is based on the afore-mentioned prior art and this prior art is, in the following, assumed to be known to the reader. In short, the new dental material is a chemically bonded ceramic material which is produced by reaction between a binding phase of one or more powdered binding agents and a liquid reacting with these bindings agents. A quantity of powder containing said binding phase is moistened (damped) with a liquid so that all powdered grains are brought into close contact with the liquid, whereupon the material is permitted to harden by reaction between said binding phase and the remaining liquid. The cited prior art also teaches to use one or more expansion-compensating additives, adapted to give the material dimensionally stable long-term properties. These additives are mixed into said powder prior to or in conjunction with the moistening by the liquid. The cited prior art also teaches many details of how said ceramic material is chemically composed and prepared and these teachings can be applied in connection with the present invention.

However, it has turned out that the known techniques of preparing the formable material can be further developed in order to improve the final quality of the dental filling. In particular, it is a goal of the present invention to improve the compact degree and homogeneity of the final dental cavity filling. In particular, the formation of cracks and micro-cavities within the dental filling shall be avoided or at least substantially reduced.

To this end, the present invention teaches a method for preparing from a raw material a formable material for filling a dental cavity, said raw material comprising a binding phase of one or more powdered binding agents which, after moistening with a liquid reacting with the binding agents, form first said formable material and then a chemically bonded ceramic material, wherein said formable material, before filling it into the dental cavity, is exposed to mechanical forces for rearranging the internal structure of the formable material.

It has been found that the quality of the final dental ceramic filling can be improved with regard to the above-stated objects if the formable material, before fully completing the chemical reaction forming the solid ceramic material, is exposed outside the dental cavity to mechanical forces wherein these mechanical forces are such that the internal structure of the formable material is rearranged. This way, the formable material is condensed and converted into a micro-structure which is better suitable to be filled into the dental cavity such that the cavity is completely filled with the material (without any micro-cavities remaining) and, furthermore, the danger of creating cracks in the dental filling is avoided. A highly homogenous filling is achieved, both with regard to density and internal structure.

Preferably, a raw material is used which, before moistening it with the liquid, has a degree of compactness of 55-67 percent by volume solid phase.

Furthermore, it has turned out that best results with regard to the above-cited goals are achieved if the mechanical forces are such that they produce, at the same time, shearing forces in the formable material and pressure, wherein the pressure moves the formable material in a common direction so that the internal rearrangement of the structure of the formable material can be looked at like a turbulent flow. Such action generates a still formable material perfectly suited to be directly filled into the dental cavity such that the above-described chemical reaction can take place in the dental cavity for forming the final ceramic material.

The present invention also teaches an apparatus for performing the method described above, wherein said apparatus comprises a container for receiving the formable material and means for applying forces to the formable material such that the internal structure of the formable material is rearranged. Such an apparatus can be used in the dental practice.

According to a preferred embodiment, said container comprises an opening through which the formable material can be inserted into a dental cavity.

Furthermore, according to another preferred embodiment said means for applying forces apply pressure to and shearing forces into the formable material.

Such an apparatus can be used directly to press the formable material, which has been prepared and manipulated as described above, through an opening into the dental cavity. To this end, said opening has a size and dimension which is adapted to the size and dimension of the dental cavity to be filled. For example, in the dental practice, a set of devices is available, wherein the openings of the containers have different sizes and diameters such that the dentist can select from that set a container comprising an opening which is best suited to the dental cavity to be filled. Such containers can be made from an inexpensive material such that the containers can be used up during the dental filling procedure. For example, that container can be made from ceramic material or plastic material.

According to a preferred embodiment, said container is itself made from a porous material such that a liquid (e.g. water) can penetrate through the container into the material therein. Preferably, the porous container has an open porosity of 20 to 50% and pore sizes of 1 to 15 µm.

Said apparatus is, according to a preferred embodiment, equipped with means for applying forces to the formable material in the container. Preferably, these means are arranged such with regard to the container that movement of the means creates both pressure and shearing forces in the formable material for rearranging the internal structure. Such rearrangement of the internal structure means a microscopic rearrangement, e.g. braking of clusters, such that a homogenous grain structure is obtained with small grain sizes and a completely homogonous moistening is obtainable. The simultaneous application of pressure and shearing forces supports such results.

According to further preferred embodiments, said container comprises an internal structure which generates shearing forces when the formable material is pressed through the container and through said opening.

According to another preferred embodiment the container is provided with openings through which liquid can enter into the container for moistening raw material in the container.

According to an alternative embodiment the container has only one opening at one end such that the material is filled into the container through the same opening through which the prepared material is removed from the container. Such a container might be made from porous material such that a liquid can pass into the container through the porous material. This embodiment directed to a container comprising one opening for filling the material into the container-cavity is preferably used with a raw material in pill-shape which is inserted into the container. The pill, when inserted into the container, may be saturated with the liquid or not (i.e. the pill maybe dry).

Thereafter, the moistened pill is exposed to the above-described mechanical forces in order to rearrange the internal structure of the material, as explained above.

According to the invention also an apparatus is provided for forming formable material which is suitable for filling a dental cavity. The apparatus comprises a rotatable member for applying mechanical forces to the formable material. According to a preferred embodiment, the rotatable member comprises a surface with protrusions for engagement with the formable material such that, upon rotation, shearing and mixing forces are generated in the formable material. Preferably, at the same time, pressure is also applied to the formable material which may be in any type of container at that time, preferably in a container as described above.

The afore-mentioned apparatus can also be used for forming the formable material directly inside the dental cavity. For example, a conventional plugger (cf. U.S. patent 4,521,191) can be equipped with such a rotatable member. The rotatable member can be mounted at the plugger such that the hand-held plugger, when pressed against the material, generates a rotational movement of the member itself. The rotation shall be at very low speed, e.g. from 0,5 to 30 rpm.

The protrusions at the surface of the rotatable member can e.g. be crown-shaped or zig-zag-shaped.

The invention also teaches the use of a dental drill for applying mechanical forces to a formable material as described above, wherein said drill is operated at 0,5 to 30 rpm.

In the following the invention is further described with reference to the figures.

The drawings show:

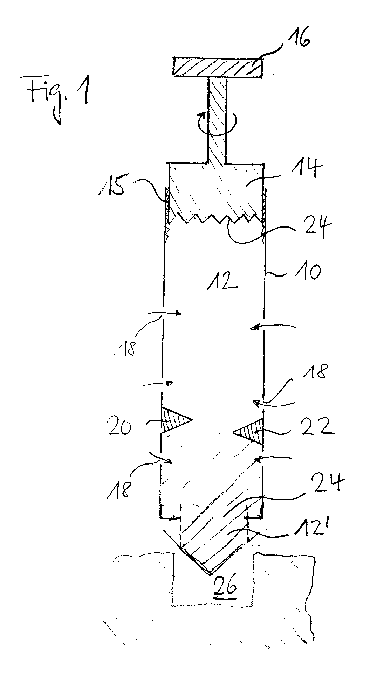

Figure 1 schematically an apparatus for preparing a formable material;
Figure 2 schematically a plugger comprising a rotatable member;
Figure 3 a dental drill; and
Figure 4 different embodiments of a rotatable member for a dental drill.

The apparatus comprises a container 10 of generally tube-shape. The container 10 is filled with raw material comprising a binding phase of one or more powdered binding agents which have the capacity, following saturation with a liquid reacting with the binding agents, to form a chemically bound ceramic material. Such raw-material is, with regard to its chemical and physical properties described in the above-cited prior art literature (WO 01/76534 and WO 01/76535) and such disclosure is incorporated herein by reference. This applies in particular, to the composition of the powder mixture including additives (WO 01/76534, p. 4 to 9), and the suspension as well as the procedure (pages 9 to 11)).

The apparatus shown in the figure is suitable for preparing a formable material from said raw material, wherein the formable material is moistured (the raw material is herein defined as not yet moistured) such that the formable material comprises the above-described advantageous properties and is ready to be filled into a dental cavity. Such a dental cavity is indicated in the figure by reference-numeral 26.

The container 10 according to the figure is closed at one end by a member 14 which is rotatable within the container 10. For example, member 14 can be manually rotated by its handle 16. Member 14 is guided in container 10, e.g. by thread 15. Alternatively the embodiment shown in the figure can be structured such that upon pressing member 14 in axial direction through the container 10 (i.e. in the figure pressing member 14 from top to bottom), automatically a rotational movement of member 14 is generated. For example, the pitch (slope) of the thread is selected such that the rotation of member 14 is automatically generated upon moving the member in axial direction, i.e. in the direction of the longitudinal axis of both member 14 and container 10.

It has been found that best filling of the dental cavity 26 is obtained if opening 24 of the container 10 has about the same diameter as the member 14 or a somewhat smaller diameter. As is schematically shown in the figure, the extruded material 12' has a size corresponding to the size of the dental cavity 26 or is somewhat smaller.

Into container 10 raw material comprising the above-described powdered binding agents is filled. That raw material may be a raw compact or a pre-compressed pill which is grained e.g. by action of member 14, or the raw material is inserted into container 10 in powdered form.

The raw material 12 inside container 10 is than saturated with a liquid which enters into container 10 through openings 18 which are homogenously distributed along the length of the container 10 such that liquid enters into the raw material from all sides and causes saturation of the raw material with said liquid. Preferably, one or more additives have been added into the raw material which compensate expansion of the material to achieve stable long-term properties regarding dimensions of the final product i.e. the ceramic filling.

According to a preferred embodiment, the container material itself is porous in order to allow a liquid, e.g. water, to penetrate through the wall of the container into the material contained in the container. A porosity of 20-50% and a pore size distribution in the range of 1-15 µm is used. The porous material of the container walls can be a ceramic material itself or any other porous material.

When the material 12 inside container 10 is fully saturated with the liquid, member 14 is moved (in the figure) downwards such that the moistured (damped) formable material is exposed to pressure and rotational forces simultaneously. The viscosity of the formable material and the dimensions of the container 10 (which is shown in the figure at an enlarged scale and only schematically) are selected such that the action of the member 14 causes, in addition to the pressure, shearing forces inside the formable material 12 as described above. Such shearing forces inside formable material 12 are enhanced by protrusions 20, 22 arranged inside container 10 as shown in the figure. The protrusions 20, 22 extend in radial direction. They cause, when the formable material is pushed in the figure downwards through opening 24, mixture in the formable material which mixture causes the above-explained rearrangement of the internal structure in the formable material.

The rotatable member 14, shown in the figure in cooperation with a container 10 can also be used without such a container. For example, a rotatable member similar to member 14 shown in the figure can be attached to a dental drill and the dental drill can be used, at relatively slow rotational speeds as indicated above, to generate pressure and shearing forces as explained above. This can be performed both in a container separate from a dental cavity or in the dental cavity itself. To this end the present invention teaches a rotational member for use in connection with a dental drill, said rotational member being formed and dimensioned such that it comprises protrusions for engagement with a formable material for generating pressure and shearing forces in that formable material.

Alternatively, the rotational member as such can also be used in a hand-held device, a so-called plugger which is used in order to press and form the formable material into and in a dental cavity. Such an embodiment of the present invention teaches a hand-held plugger (also called a "condensing instrument for packing and condensing dental material") which is equipped, at at least one end, with a rotatable member 14 as described above. The rotatable member is, according to a specific embodiment, supported at one end of the plugger such that, upon generating pressure, the member is rotated at very slow rotational speed (see above) in order to generate mixing and shearing forces in the formable material. For example, the rotatable member can be mounted at the plugger with a threaded mounting comprising the above-described slope so that axial pressure generates slow rotational movement of the member itself.

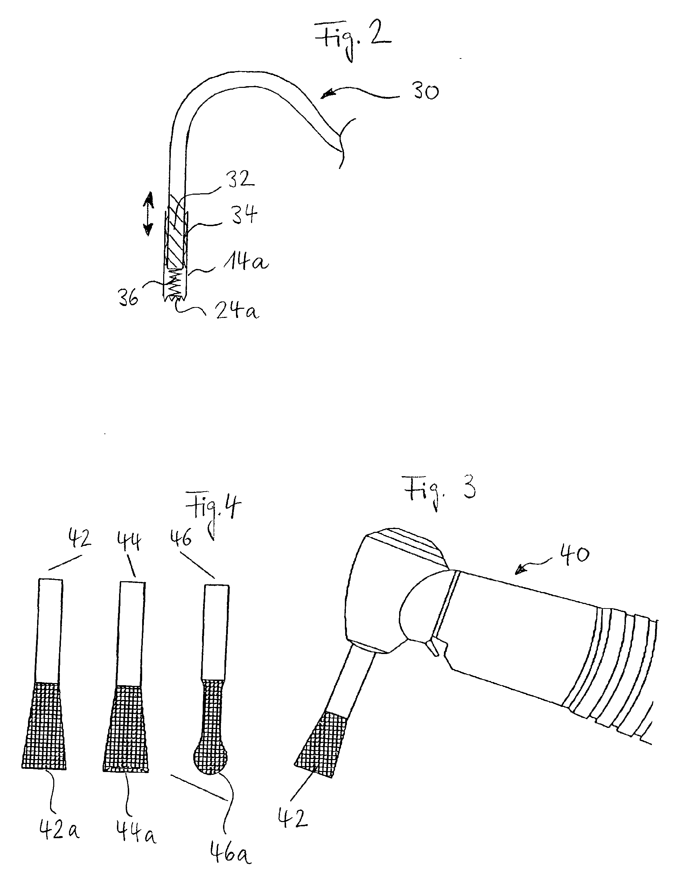

Figure 2 shows a plugger 30 comprising a rotatable member 14a for exerting mechanical forces onto and into a formable material as described above. For example, the rotatable member 14a according to figure 2 can be used directly for plugging the formable material into a dental cavity. Alternatively, rotatable member 14a according to figure 2 can be used to mix a formable material in a container as described above. In figure 2, the handle of the plugger and a possible second end of the plugger comprising e.g. similar means as the shown end, are omitted. The shown end of the plugger 30 is provided with a thread 32 and rotatable member 14a is provided with a corresponding thread 34. Member 14a is, simultaneously, moveable in axial direction, as indicated by the arrow in figure 2, and rotatable about the longitudinal axis. The slope (pitch) of the thread 32 is such that when rotatable member 14a is pressed against e.g. a formable material in a dental cavity or in a container, said pressure causes the rotatable member to rotate and to move, in figure 2, upwards. When rotatable member 14a is released from that pressure, spring 36 causes the rotatable member 14 to return into its initial position. Therefore, a dentist can generate by means of a plugger as shown in figure 2, simultaneously both pressure and shearing forces in the formable material by simply pressing (in conventional manner) the head (rotatable member 14a) of the plugger onto the formable material when filling the dental cavity. Surface 24a of rotatable member 14a is provided with protrusions in order to enhance the engagement between member 14a and the formable material. Preferably, rotatable member 14a, at least at its tip end its tip surface 24a, comprises a surface of a ceramic material (preferred details of that ceramic material are described below).

Figure 3 shows a dental drill 40 which is equipped with a rotatable member 42 for exerting forces onto and into a formable material as described above. Figure 4 shows three different embodiments of a rotatable member which can be attached to the dental drill 40. Rotatable member 42 is provided with a ceramic coating 42a. Rotatable member 44 is provided, at its tip, with a bulk body of ceramic material. Rotatable member 46 comprises also a surface from ceramic material, however, has a different shape for special applications.

The dental drill 40, equipped with a rotatable member as outlined above, is operated at rotational speeds as described above.

The above-described ceramic material for the rotatable member 14 and 14a, respectively, is preferably a metal-oxide-ceramic.

In particular, the following materials have been found to be most suitable in order to prevent contamination of the formable dental material by material from the rotatable member: Al₂O₃, Al₂O₃ in mixture with TiO₂, wherein the content by weight of TiO₂ is between 3 and 40 %; Cr₂O₃; Cr₂O₃ in a mixture with TiO₂, wherein the content of TiO₂ is between 3 and 55 % by weight; and Cr₂O₃ in a mixture with TiO₂ and SiO₂, wherein the latter substances (TiO₂ and SiO₂) are added in a range of 2 to 10 %, by weight.

## Claims

1. Method for preparing from a raw material a formable material, said raw material comprising a binding phase of one or more powdered binding agents which, after moistening with a liquid reacting with the binding agents, form first said formable material and then a chemically bonded ceramic material, **characterized in that** said formable material, before applying it or filling it into a cavity, is exposed to mechanical forces for rearranging the internal structure of the formable material.

2. Method according to claim 1, **characterized in that** said raw material, before moistening it with the liquid, has a degree of compactness of 55-67 percent by volume solid phase.

3. Method according to one of the claims 1 or 2, **characterized in that** said mechanical forces comprise shearing forces.

4. Method according to one of the preceding claims, **characterized in that** said mechanical forces comprise pressure.

5. Method according to one of the preceding claims, **characterized in that** said raw material, before it is moistened with a liquid, is in a compact form, e.g. in form of a pill or tablet.

6. Apparatus for performing a method according to one of the claims 1 to 5 comprising
- a container (10) for receiving the formable material, and
- means (14) for applying forces to the formable material (12) such that the internal structure of said formable material (12) is rearrangable.

7. Apparatus according to claim 6, **characterized in that** said container (10) comprises an opening (24) through which the formable material (12) can be inserted into a dental cavity (26).

8. Apparatus according to one of the claims 6 or 7, **characterized in that** said means (14) for applying forces apply pressure to and shearing forces into the formable material (12).

9. Apparatus according to claim 7, **characterized in that** said forces press the formable material (12) through said opening (24).

10. Apparatus according to one of the claims 6 to 9, **characterized in that** the container (10) comprises an internal structure (20, 22, 24) causing shearing forces in said formable material (12) when said forces are applied.

11. Apparatus according to claim 7, **characterized in that** containers (10) with openings (24) of different size of the openings (24) are provided.

12. Apparatus according to one of the claims 6 to 11, **characterized in that** said means (14) for applying forces are adapted to be rotatable relative to the container (10).

13. Apparatus according to one of the claims 6 to 12, **characterized in that** said container (10) comprises one or more openings (18) for moistening of material in said container.

14. Apparatus according to one of the claims 6 to 12, **characterized in that** said container (10) is made, at least partially, from a porous material such that a liquid can penetrate through the container walls into material contained in the container.

15. Apparatus for forming a formable material for filling a dental cavity, said apparatus comprising a rotatable member for applying mechanical forces to said formable material.

16. Apparatus according to claim 15, **characterized in that** said rotatable member (14) comprises a surface (24) with protrusions for engagement with said formable material.

17. Apparatus according to one of the claims 15 or 16, **characterized in that** said apparatus is a hand-held plugger.

18. Use of a dental drill comprising a rotatable member for applying mechanical forces to a formable material for filling dental cavities wherein said drill is operated at 0,5 to 30 rotations per minute (rpm).
